# EUROPÄISCHE PATENTSCHRIFT

(11) **EP 1 792 810 B1**
(45) Veröffentlichungstag und Bekanntmachung des Hinweises auf die Patenterteilung: **18.11.2009**
(21) Anmeldenummer: 06024793.9
(22) Anmeldetag: 30.11.2006
(51) Int. Cl.: B62D 35/00

(54) **Nutzfahrzeug mit Öffnung im Dachspoiler**
Utility vehicle with an opening in a roof spoiler
Véhicule utilitaire avec une ouverture dans le spoiler de toit

(30) Priorität: 02.12.2005 DE 102005057619
(43) Veröffentlichungstag der Anmeldung: 06.06.2007
(73) Patentinhaber: MAN Nutzfahrzeuge Aktiengesellschaft, 80976 München (DE)
(72) Erfinder: Mederle, Günther, 85051 Ingolstadt (DE); Kneifel, Eberhard, 89250 Senden (DE); Kopp, Stephan, 83623 Dietramszell (DE)

(56) Entgegenhaltungen:
- EP-A- 1 792 809
- DE-A1- 2 743 226
- DE-C1- 19 609 049

## Beschreibung

### Stand der Technik

Die Erfindung betrifft ein Nutzfahrzeug mit einem Fahrerhaus, in dessen Dach eine Dachluke vorgesehen ist, mit einer sich vom Dach aus nach oben und hinten schräg erstreckenden Luftleiteinrichtung zur strömungsgünstigen Anströmung eines hinter dem Fahrerhaus angeordneten Aufbaus oder Aufliegers, gemäß dem Oberbegriff von Anspruch 1.

Nutzfahrzeuge werden zur Verringerung des Luftwiderstands mit Luftleiteinrichtungen oder Dachspoilern versehen. Diese sollen den Zwischenraum zwischen der Dachoberfläche des Führerhauses und dem zumeist höheren Aufbau des Nutzfahrzeugs bzw. dem höheren Auflieger im Falle einer Zugfahrzeug-Anhängerkombination in der Weise überbrücken, dass die Luftströmung nicht abreißt bzw. es nicht zu allzu großen Verwirbelungen kommt. Solche Dachspoiler oder Luftleitflügel sind zur Anpassung an unterschiedliche Höhen des Aufbaus bzw. des Aufliegers oft höhenverstellbar.

Ein Nutzfahrzeug mit einer gattungsgemäßen Luftleiteinrichtung ist aus der DE 196 09 049 C1 bekannt. Dabei ist ein vorderer Abschnitt der Dachluke in Fahrtrichtung gesehen der Luftleiteinrichtung vorgeordnet. Um ein Ausklappen der Dachluke um einen bestimmten Winkel zum Öffnen zu ermöglichen, ist die Luftleiteinrichtung an ihrem vorderen Rand mit einer Aussparung versehen. Der Dachluke ist ein kurzer Luftleitflügel vorgeordnet, um eine Unterströmung der Luftleiteinrichtung aufgrund von durch die Aussparung hindurchströmenden Teilströmen des Fahrtwindes zu vermeiden. Weiterhin soll durch diese Maßnahme auch ein zugfreies Öffnen und Schließen der Dachluke auch während des Fahrbetriebs möglich sein.

Der vorliegenden Erfindung liegt demgegenüber die Aufgabe zugrunde, ein Nutzfahrzeug der eingangs erwähnten Art derart weiter zu entwickeln, dass durch die Luftleiteinrichtung eine verbesserte Aerodynamik des Nutzfahrzeuges erreicht und zudem eine vereinfachte Herstellung und Montage dieser Luftleiteinrichtung erzielt wird.

Erfindungsgemäß wird diese Aufgabe durch die Merkmale von Anspruch 1 gelöst.

### Vorteile der Erfindung

Die Erfindung schlägt vor, die Luftleiteinrichtung mit einer Öffnung für die Dachluke zu versehen, welche in Fahrtrichtung gesehen durch einen vorderen, vor der Dachluke angeordneten Abschnitt und durch einen hinteren, hinter der Dachluke angeordneten Abschnitt der Luftleiteinrichtung begrenzt ist, wobei der vordere Abschnitt und der hintere Abschnitt durch Seitenabschnitte miteinander in Verbindung stehen und der hintere Abschnitt der Luftleiteinrichtung einen zentralen eingezogenen Bereich aufweist, der als Luftleitkanal von dem hinteren Rand der Öffnung ausgehend ansteigt. Insbesondere durch diesen Luftleitkanal ergibt sich eine verbesserte Führung der Luftströmung hinter der Dachluke, wodurch deren Neigung zum Abreißen und die Ausbildung einer turbulenter Strömung während der Umlenkung vom Dach des Fahrerhauses zum Aufbau wesentlich reduziert wird.

Nicht zuletzt kann sich die Luftleiteinrichtung wegen der Öffnung für die Dachluke ausreichend lang ausgeführt werden und sich auch bis in den vorderen Dachbereich hinein erstrecken, damit die Luftströmung ohne allzu große Umlenkung allmählich vom Dach zu dem demgegenüber höheren Aufbau oder Auflieger geleitet wird.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt ist die Luftleiteinrichtung einstückig ausgebildet, d.h. der vordere Abschnitt, der hintere Abschnitt, die Seitenabschnitte und der Luftleitkanal sind in einem einzigen Bauteil integriert. Dies bedingt eine vereinfachte Montage der Luftleiteinrichtung, zumal Fehler, wie sie durch falsche Relativpositionierung einzelner Bauteile entstehen könnten, vermieden werden.

Gemäß einer Fortbildung überdeckt der vordere Abschnitt der Luftleiteinrichtung die Dachluke in Fahrtrichtung höchstens teilweise. Die Überdeckung verhindert eine Luftströmung durch die Öffnung hindurch in die geöffnete Dachluke, so dass die Fahrerkabine des Nutzfahrzeugs zugfrei belüftet werden kann. Weiterhin kann während der Fahrt die Dachluke auch bei Regen geöffnet bleiben, weil durch die Überdeckung die regennasse Luft über die Dachluke geleitet wird. Da die Überdeckung höchstens teilweise erfolgt, d.h., dass stets eine gewisse Fläche der Dachluke unüberdeckt bleibt, wird andererseits ein erwünschter Lichteinfall in die Fahrerkabine durch die ggf. als transparentes Sonnendach ausgebildete Dachluke nicht behindert.

Ein besonders günstiger Strömungsverlauf über die Dachluke hinweg ergibt sich, wenn der in Fahrtrichtung gesehen vordere Rand der Öffnung als Spoilerlippe ausgebildet ist, welche bezogen auf ihre Höhe den hinteren Rand der Öffnung überragt. Wenn zusätzlich der hintere Rand der Öffnung im wesentlichen mit einem hinteren Ende der Dachluke fluchtet, kann diese in die Öffnung der Luftleiteinrichtung hineinklappen, wodurch sich ein vorteilhaft großer Öffnungswinkel der Dachluke ergibt.

Weitere Vorteile ergeben sich aus den in den weiteren Unteransprüchen angegebenen Merkmalen.

### Zeichnungen

Nachstehend ist ein Ausführungsbeispiel der Erfindung in den Zeichnungen dargestellt und in der nachfolgenden Beschreibung näher erläutert. In den Zeichnungen zeigt
- Fig,1: eine perspektivische Ansicht einer Luftleiteinrichtung gemäß einer bevorzugten Ausführungsform der Erfindung;

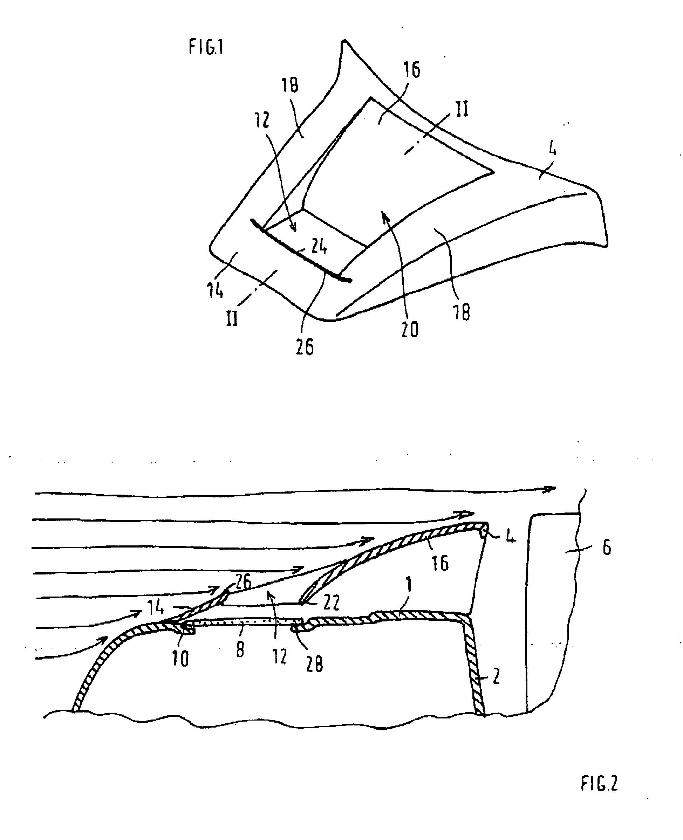

- Fig.2: einen Längsschnitt entlang der Linie II-II von Fig. 1.

### Beschreibung des Ausführungsbeispiels

Ein Nutzfahrzeug ist mit einer in Fig.1 und Fig.2 gezeigten, auf einem Dach 1 des Fahrerhauses 2 angeordneten Luftleiteinrichtung 4 versehen. Bei dem Fahrerhaus 2 kann es sich um ein Fahrerhaus eines Nutzfahrzeugs handeln, das ein Zugfahrzeug einer Zugfahrzeug-Auflieger-Kombination ist oder um ein Fahrerhaus eines Nutzfahrzeugs mit einem eigenen Aufbau 6, wie hier gezeigt.

Wie aus Fig.2 hervorgeht, ist eine vorzugsweise transparente Dachluke 8 als Sonnendach vorhanden, welche gegenüber dem Dach 1 um eine in Fahrtrichtung gesehen am vorderen Ende angeordnete Schwenkachse 10 bis zu einem bestimmten maximalen Winkel von der gezeigten geschlossenen Stellung in eine ausgeklappte Stellung verschwenkt werden kann.

Da die Luftleiteinrichtung 4, im folgenden Dachspoiler genannt, in Fahrzeuglängsrichtung eine bestimmte Erstreckung aufweisen muss, um die Luftströmung ohne allzu große Umlenkung allmählich vom Dach 1 zu dem demgegenüber höheren Aufbau 6 zu leiten, ist in dem sich nach oben und hinten schräg erstreckenden Dachspoiler 4 eine Öffnung 12 vorgesehen, in welche die Dachluke 8 von unten her einklappen kann.

Die Öffnung 12 ist in Fahrtrichtung gesehen durch einen vorderen, vor der Dachluke 8 angeordneten Abschnitt 14 und durch einen hinteren, hinter der Dachluke 8 angeordneten Abschnitt 16 des Dachspoilers 4 begrenzt, wobei der vordere Abschnitt 14 und der hintere Abschnitt 16 durch zwei armartige Seitenabschnitte 18 miteinander in Verbindung stehen.

Darüber hinaus weist der hintere Abschnitt 16 des Dachspoilers 4 einen zentralen eingezogenen Bereich 20 auf, der als Luftleitkanal von einem hinteren Rand 22 der Öffnung ausgehend allmählich bis zum Niveau der Seitenabschnitte 18 im Bereich des hinteren Abschnitts 16 des Dachspoilers 4 ansteigt. Dabei weist der Luftleitkanal 20 im wesentlichen die gleiche Breite quer zur Fahrtrichtung auf wie die Öffnung 12, welche wiederum wenigstens die gleiche Breite wie die Dachluke 8 aufweist.

Besonders bevorzugt ist der Dachspoiler 4 einstückig ausgebildet, d.h. der vordere Abschnitt 14, der hintere Abschnitt 16, die Seitenabschnitte 18 und der Luftleitkanal 20 sind in einem einzigen Bauteil aus beispielsweise faserverstärktem Kunststoff integriert.

Wie Fig. 2 zeigt, überdeckt der vordere Abschnitt 14 des Dachspoilers die Dachluke 8 in Fahrtrichtung höchstens teilweise. Ein besonders günstiger Strömungsverlauf Ober die Dachluke 8 hinweg ergibt sich, wenn der in Fahrtrichtung gesehen vordere Rand 24 der Öffnung 12, der am vorderen Abschnitt 14 des Dachspoilers 4 angeordnet ist, als Spoilerlppe 26 ausgebildet ist. Darüber hinaus fluchtet der hintere Rand 22 der Öffnung 12 am hinteren Abschnitt 16 des Dachspoilers 4 im wesentlichen mit dem hinteren Ende 28 der Dachluke 8. Dann kann die Dachluke 8 in die Öffnung 12 des Dachspoilers 4 hineinklappen.

Abweichend von der hier gezeigten einstückigen Ausführung könnte zumindest ein Bereich des Dachspoilers 4 in Breite, Höhe oder Neigung einstellbar ausgebildet sein, um als standardisierte Baugruppe eine Anpassung an unterschiedliche Breiten von Dächern 1 und/oder an unterschiedliche Höhen von Aufbauten 6 oder Aufliegern zu ermöglichen.

## Patentansprüche

1. Nutzfahrzeug mit einem Fahrerhaus, in dessen Dach (1) eine Dachluke (8) vorgesehen ist, mit einer sich vom Dach (1) aus nach oben und hinten schräg erstreckenden Luftleiteinrichtung (4) zur strömungsgünstigen Anströmung eines hinter dem Fahrerhaus angeordneten Aufbaus (6) oder Aufliegers, **dadurch gekennzeichnet, dass** die Luftleiteinrichtung (4) mit einer Öffnung (12) für die Dachluke (8) versehen ist, welche in Fahrtrichtung gesehen durch einen vorderen, vor der Dachluke (8) angeordneten Abschnitt (14) und durch einen hinteren, hinter der Dachluke (8) angeordneten Abschnitt (16) der Luftleiteinrichtung (4) begrenzt ist, wobei der vordere Abschnitt (14) und der hintere Abschnitt (16) durch Seitenabschnitte (18) miteinander in Verbindung stehen und der hintere Abschnitt (16) der Luftleiteinrichtung (4) einen zentralen eingezogenen Bereich (20) aufweist, der als Luftleitkanal von dem hinteren Rand (22) der Öffnung (12) ausgehend ansteigt.

2. Nutzfahrzeug nach Anspruch 1, **dadurch gekennzeichnet, dass** die Luftleiteinrichtung (4) einstückig ausgebildet ist.

3. Nutzfahrzeug nach Anspruch 1 oder 2, **dadurch gekennzeichnet, dass** der vordere Abschnitt (14) der Luftleiteinrichtung (4) die Dachluke (8) in Fahrtrichtung höchstens teilweise überdeckt.

4. Nutzfahrzeug nach Anspruch 3, **dadurch gekennzeichnet, dass** der in Fahrtrichtung gesehen vordere Rand (24) der Öffnung (12) als Spoilerlippe (26) ausgebildet ist, welche bezogen auf ihre Höhe den hinteren Rand (22) der Öffnung (12) überragt.

5. Nutzfahrzeug nach Anspruch 4, **dadurch gekennzeichnet, dass** der hintere Rand (22) der Öffnung (12) im wesentlichen mit einem hinteren Ende (28) der Dachluke (8) fluchtet.

6. Nutzfahrzeug nach wenigstens einem der vorhergehenden Ansprüche, **dadurch gekennzeichnet, dass** der Luftleitkanal (20) im wesentlichen die gleiche Breite quer zur Fahrtrichtung aufweist wie die Öffnung (12).

7. Nutzfahrzeug nach wenigstens einem der vorhergehenden Ansprüche, **dadurch gekennzeichnet, dass** sich die Breite der Luftleiteinrichtung (4) quer zur Fahrtrichtung vergrößert.

8. Nutzfahrzeug nach wenigstens einem der vorhergehenden Ansprüche, **dadurch gekennzeichnet, dass** der Luftleitkanal (20) bis zum Niveau der Seitenabschnitte (18) im hinteren Abschnitt (16) ansteigt.

9. Nutzfahrzeug nach wenigstens einem der vorhergehenden Ansprüche, **dadurch gekennzeichnet, dass** zumindest ein Bereich der Luftleiteinrichtung (4) zur Anlassung an verschiedene Dächer, Aufbauten oder Auflieger in Breite. Höhe oder Neigung einstellbar ausgebildet ist.

## Claims

1. Commercial vehicle with a cab, which has a roof hatch (8) in its roof (1) with an air deflector (4) extending out upwards and backwards at an angle from the roof (1) for an aerodynamic air flow around a body (6) or a semi-trailer attached behind the cab, which is **characterised by** the air deflector (4) having an opening (12) for the roof hatch (8). When viewed in the direction of travel, this opening is bordered by a front section (14) of the air deflector affixed in front of the roof hatch (8) and a rear section (16) of the air deflector affixed behind the roof hatch (8). The front section (14) and rear section (16) are connected to one another with side sections (18) and the rear section (16) of the air deflector (4) features a central retracted area (20), which rises as an air channel from the rear edge (22) of the opening (12).

2. Commercial vehicle as per claim 1, **characterised by** the air deflector (4) being a one-piece construction.

3. Commercial vehicle as per claim 1 or 2, **characterised by** the front section (14) of the air deflector (4) at most partially covering the roof hatch (8) in the direction of travel.

4. Commercial vehicle as per claim 3, **characterised by** the front edge (24) of the opening (12), when viewed in the direction of travel, being constructed as a spoiler lip (26) that protrudes over the rear edge (22) of the opening (12) with regard to its height.

5. Commercial vehicle as per claim 4, **characterised by** the rear edge (22) of the opening (12) fundamentally being aligned with a rear end (28) of the roof hatch (8).

6. Commercial vehicle as per at least one of the previous claims, **characterised by** the air channel (20) having fundamentally the same width at right angles to the direction of travel as the opening (12).

7. Commercial vehicle as per at least one of the previous claims, **characterised by** the width of the air deflector (4) increasing at right angles to the direction of travel.

8. Commercial vehicle as per at least one of the previous claims, **characterised by** the air channel (20) rising to the level of the side sections (18) in the rear section (16).

9. Commercial vehicle as per at least one of the previous claims, **characterised by** at least one area of the air deflector (4) being designed to be adjustable to different roofs, bodies or semi-trailers in terms of width, height or inclination.

## Revendications

1. Véhicule industriel avec une cabine dont le pavillon (1) est pourvu d'une trappe de pavillon (8), avec un dispositif déflecteur d'air (4) s'étendant à partir du pavillon (1) vers le haut et de manière ascendante dans sa partie arrière assurant ainsi l'écoulement aérodynamique de l'air vers une carrosserie (6) disposée derrière la cabine ou vers une semi-remorque, **caractérisé en ce que** le dispositif déflecteur d'air (4) est pourvu d'une ouverture (12) pour la trappe de pavillon (8) qui est limitée, vu dans le sens de la marche du véhicule, par une partie avant (14) du dispositif déflecteur d'air (4) disposée devant la trappe de pavillon (8) et par une partie arrière (16) du dispositif déflecteur d'air (4) disposée derrière la trappe de pavillon (8), la partie avant (14) et la partie arrière (16) étant reliées par des parties latérales (18) et la partie arrière (16) du dispositif déflecteur d'air (4) présentant une zone centrale rétractée (20), qui est ascendante à partir du bord arrière (22) de l'ouverture (12) servant ainsi de canal de guidage d'air.

2. Véhicule industriel selon la revendication 1, **caractérisé en ce que** le dispositif déflecteur d'air (4) est formé de manière monobloc.

3. Véhicule industriel selon la revendication 1 ou 2, **caractérisé en ce que** la partie avant (14) du dispositif déflecteur d'air (4) est n'est que partiellement en chevauchement avec la trappe de pavillon (8) au maximum, vu dans le sens de la marche du véhicule.

4. Véhicule industriel selon la revendication 3, **caractérisé en ce que** le bord avant (24) de l'ouverture (12), vu dans le sens de la marche du véhicule, est conçu comme lèvre de déflecteur (26) dont la hauteur est supérieure à celle du bord arrière (22) de l'ouverture (12).

5. Véhicule industriel selon la revendication 4, **caractérisé en ce que** le bord arrière (22) de l'ouverture (12) est essentiellement en alignement avec une extrémité arrière (28) de la trappe de pavillon (8).

6. Véhicule industriel selon au moins une des revendications mentionnées précédemment, **caractérisé en ce que** le canal de guidage d'air (20) a essentiellement la même largeur que l'ouverture (12), transversalement par rapport au sens de la marche du véhicule.

7. Véhicule industriel selon au moins une des revendications mentionnées précédemment, **caractérisé en ce que** la largeur du dispositif déflecteur d'air (4) s'agrandit transversalement par rapport au sens de la marche du véhicule.

8. Véhicule industriel selon au moins une des revendications mentionnées précédemment, **caractérisé en ce que** le canal de guidage d'air (20) est ascendant dans sa partie arrière (16) jusqu'au niveau des parties latérales (18).

9. Véhicule industriel selon au moins une des revendications mentionnées précédemment, **caractérisé en ce qu'**au moins une zone du dispositif déflecteur d'air (4) est conçue de manière réglable pour permettre de l'adapter à la largeur, à la hauteur ou à l'inclinaison des différents pavillons, carrosseries ou semi-remorques.
